# EUROPEAN PATENT APPLICATION

(11) **EP 2 717 534 A1**
(43) Date of publication of application: **09.04.2014**
(21) Application number: 12187113.1
(22) Date of filing: 03.10.2012
(51) Int. Cl.: H04L 29/06, H04L 29/08

(54) **System and method for requesting content using an electronic device**

(71) Applicant: BlackBerry Limited, Waterloo, ON N2K 0A7 (CA)
(72) Inventor: Martin, Daryl Joseph, Waterloo, Ontario N2L 3W8 (CA); O'Neill, Conor Michael, Waterloo, Ontario N2L 3W8 (CA); Cietwierkowski, Marcin, Waterloo, Ontario N2L 3W8 (CA)
(74) Representative: Moore, Barry

(57) **Abstract**

A method and system are provided for requesting content using an electronic device. The electronic device is operable to connect to a communication network using a network connection. The method includes detecting connection information regarding the network connection, determining at least one property of the content to be requested using the connection information and sending a protocol request to a server using the communication network, the protocol request comprising header information indicative of the at least one property.

## Description

### TECHNICAL FIELD

The following relates generally to requesting content using an electronic device.

### DESCRIPTION OF THE RELATED ART

Many electronic devices, including mobile devices, can connect to a communication network, such as the Internet, using one or more network connections. For example, a smartphone may connect to the Internet using a cellular network connection (e.g. 3G) and/or a wireless local area network connection (e.g. Wi-Fi). However, different types of network connections can provide different speeds and maximum data transfer rates. Furthermore, even while using a single network connection, the data transfer rates may be influenced by other factors such as the reception or signal strength of the network connection. For example, the signal strength can be affected by the operating environment of the mobile device, such as its distance from the signal source or presence of physical obstacles blocking or attenuating the signal.

### SUMMARY

In one aspect, there is provided a method of requesting content using an electronic device. The electronic device is operable to connect to a communication network using a network connection. The method includes detecting connection information regarding the network connection, determining at least one property of the content to be requested using the connection information, and sending a protocol request to a server using the communication network, the protocol request comprising header information indicative of the at least one property. The method may also include obtaining at least a portion of the connection information from a network provider of the network connection.

In another aspect, there is provided a computer readable storage medium for requesting content using an electronic device. The electronic device is operable to connect to a communication network using a network connection. The computer readable storage medium includes computer readable instructions for detecting connection information regarding the network connection, determining at least one property of the content to be requested using the connection information, and sending a protocol request to a server using the communication network, the protocol request comprising header information indicative of the at least one property. The computer readable storage medium may also include computer executable instructions for obtaining at least a portion of the connection information from a network provider of the network connection.

In another aspect, there is provided an electronic device for requesting content. The electronic device is operable to connect a communication network using a network connection. The electronic device includes a processor coupled to memory. The memory stores computer executable instructions for detecting connection information regarding the network connection, determining at least one property of the content to be requested using the connection information, and sending a protocol request to a server using the communication network, the protocol request comprising header information indicative of the at least one property. The memory may also store computer executable instructions for obtaining at least a portion of the connection information from a network provider of the network connection.

For the method, computer readable storage medium and/or electronic device, the connection information may include any one or more of a connection type, a signal strength, a signal quality and a data transfer capacity. Determining at least one property of the content using the connection information may include selecting a variant of the content from a plurality of variants available to the server. The at least one property may include any one or more of a content size and a content format. The content format may include a mobile format and the header may include a user agent set to a mobile web browser. The network connection may be a wireless network. The protocol request may use any one of an application layer protocol, a session layer protocol and a transport layer protocol. The protocol request may use Hypertext Transfer Protocol (HTTP) or Wireless Application Protocol (WAP). The protocol request may be sent to the server for performing at least one service on the content according to the header information, the at least one service configured to configure the content to satisfy the at least one property.

### BRIEF DESCRIPTION OF THE DRAWINGS

Embodiments will now be described by way of example only with reference to the appended drawings wherein:

FIG. 1 is a diagram of an example of a communication system.

FIG. 2 is a diagram of an example of another communication system.

FIG. 3 is a diagram of an example of a mobile device.

FIG. 4 is a plan view of an example of a mobile device.

FIG. 5 is a plan view of another example of a mobile device.

FIG. 6 is a diagram of an example configuration of a protocol communication module.

FIG. 7 is a flow diagram of example computer executable instructions for requesting content using an electronic device.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practised without these specific details. In other instances, well-known methods, procedures and components have not been described in detail so as not to obscure the example embodiments described herein. Also, the description is not to be considered as limiting the scope of the example embodiments described herein.

Different network connections and operating environments can affect the data transfer rates obtainable by an electronic device. In certain circumstances, an electronic device may obtain content, such as a webpage stored on a web server, in an amount of time that that may frustrate or inconvenience a user for being too slow and thus, providing a poor user experience. To address this, the following describes a method, computer readable storage medium and electronic device operable to request content over a communication network.

In one aspect, there is provided a method of requesting content using an electronic device. The electronic device is operable to connect to a communication network using a network connection. The method includes detecting connection information regarding the network connection, determining at least one property of the content to be requested using the connection information, and sending a protocol request to a server using the communication network, the protocol request comprising header information indicative of the at least one property. The method may also include obtaining at least a portion of the connection information from a network provider of the network connection.

In another aspect, there is provided a computer readable storage medium for requesting content using an electronic device. The electronic device is operable to connect to a communication network using a network connection. The computer readable storage medium includes computer readable instructions for detecting connection information regarding the network connection, determining at least one property of the content to be requested using the connection information, and sending a protocol request to a server using the communication network, the protocol request comprising header information indicative of the at least one property. The computer readable storage medium may also include computer executable instructions for obtaining at least a portion of the connection information from a network provider of the network connection.

In another aspect, there is provided an electronic device for requesting content. The electronic device is operable to connect a communication network using a network connection. The electronic device includes a processor coupled to memory. The memory stores computer executable instructions for detecting connection information regarding the network connection, determining at least one property of the content to be requested using the connection information, and sending a protocol request to a server using the communication network, the protocol request comprising header information indicative of the at least one property. The memory may also store computer executable instructions for obtaining at least a portion of the connection information from a network provider of the network connection.

For the method, computer readable storage medium and/or electronic device, the connection information may include any one or more of a connection type, a signal strength, a signal quality and a data transfer capacity. Determining at least one property of the content using the connection information may include selecting a variant of the content from a plurality of variants available to the server. The at least one property may include any one or more of a content size and a content format. The content format may include a mobile format and the header may include a user agent set to a mobile web browser. The network connection may be a wireless network. The protocol request may use any one of an application layer protocol, a session layer protocol and a transport layer protocol. The protocol request may use Hypertext Transfer Protocol (HTTP) or Wireless Application Protocol (WAP). The protocol request may be sent to the server for performing at least one service on the content according to the header information, the at least one service configured to configure the content to satisfy the at least one property.

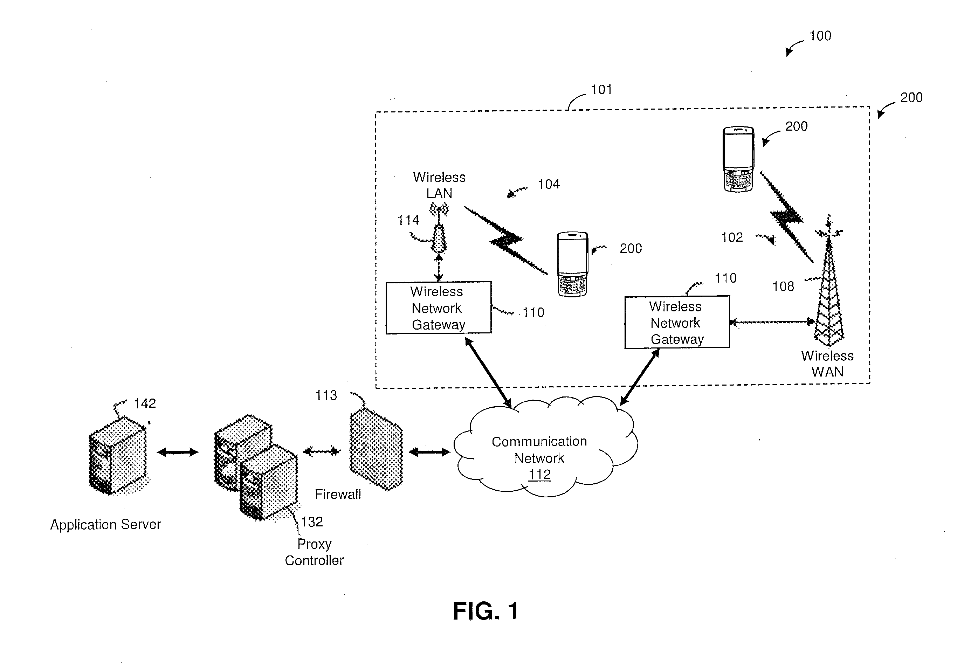

Referring to FIG. 1, a block diagram of an example communication system 100 is provided. The communication system 100 includes an electronic device, such as a mobile device 200, which may be connected to the remainder of communication system 100 in any of several different ways. For illustrative purposes, two instances of mobile device 200 are depicted in FIG. 1, each employing different example ways of connecting to the communication system 100.

In one example, mobile device 200 is connected to a wireless communication network 101, which may comprise one or more of a Wireless Wide Area Network (WWAN) 102, a Wireless Local Area Network (WLAN) 104, or any other suitable network arrangements. In some embodiments, the mobile device 200 is configured to communicate over both the WWAN 102 and WLAN 104, and to roam between these networks. In some embodiments, the wireless network 101 may comprise multiple WWANs 102 and WLANs 104 (for simplicity only one WWAN and one WLAN are illustrated in FIG. 1). Other types of networks (not shown) may be used by the mobile device 200 to gain access to the communication system 100. For example, other types of networks may include short range radio frequency (RF) systems, wireless USB, optical communications systems, etc.

The WWAN 102 may be implemented as any suitable wireless access network technology. For example, the WWAN 102 may be implemented as a wireless network that includes a number of base stations 108 (one of which is shown in FIG. 1), each containing radio transmitting and receiving equipment adapted to provide wireless radio-frequency (RF) network service or "coverage" to a corresponding area or cell. The WWAN 102 is typically operated by a mobile network service provider that may provide a subscription package to a user of mobile device 200. The WWAN 102 may be implemented as any appropriate wireless network, including, but not limited to, one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSPDA (High-Speed Downlink Packet Access), IEEE 802.16e (also referred to as Worldwide Interoperability for Microwave Access or "WiMAX"), Long Term Evolution (LTE), satellite communications system, radio systems, or many other wireless network technologies known to those of skill in the relevant art. Although WWAN 102 is described as a "Wide-Area" network, that term is intended herein also to incorporate wireless Metropolitan Area Networks (WMAN) and other similar technologies for providing coordinated service wirelessly over an area larger than that covered by typical WLANs.

A wireless network gateway 110 may be associated with the WWAN 102 to connect the mobile device 200 to a communication network 112, and through the communication network 112 to other portions of the communications system. It will be appreciated that the communication network 112 may include one or more private networks or lines, the Internet, a virtual private network, or any other suitable network. The wireless network gateway may include a wireless access point, a router, a modem or any other device required to connect the mobile device 200 to the communication network 112, or provide the functionality of such devices in a common device. The wireless network gateway 110 may also provide network functions such as a firewall.

Turning to another example network connection, the mobile device 200 may be connected via WLAN 104. The WLAN 104 comprises a wireless network which, in some embodiments, conforms to IEEE 802.11x standards (sometimes referred to as Wi-Fi) such as, for example, any or all of the IEEE 802.11a, 802.11b, 802.11g, or 802.11n standards. Other communication protocols may be used for the WLAN 104 in other embodiments such as, for example, IEEE 802.16e (also referred to as Worldwide Interoperability for Microwave Access or "WIMAX"), or IEEE 802.20 (also referred to as Mobile Wireless Broadband Access). The WLAN 104 includes one or more wireless RF Access Points (AP) 114 (one of which is shown in FIG. 1) that collectively provide WLAN service or coverage over an area.

The WLAN 104 may be a personal network of the user, an enterprise network, or a hotspot offered by an internet service provider (ISP), a mobile network provider, or a property owner in a public or semi-public area, for example. The access points 114 are connected to a wireless network gateway 110 to connect the mobile device 200 to the communication network 112 in a similar manner as described above.

An application server 142 may also be connected to the communication network 112, optionally via a proxy controller 132 and/or firewall 113. The application server 142 may encompass both content servers for providing content such as Internet content (eg. web server) or content from an organization's internal servers, as well as servers for implementing server-based applications such as instant messaging (IM) applications.

An application running on a mobile device 200 may be in communication with one of more application servers 142 through one or more proxy controllers 132. The proxy controller 132 may be configured to selectively perform one or more proxy services. The proxy controller 132 may be part of the application server 142 or be implemented as a stand alone proxy server (not shown) that is a separate computer from the application server 142.

In an example communication from the mobile device 200 to the application server 142, the mobile device 200 sends packets of data to the wireless network gateway 110 over the WWAN 102 or WLAN 104. The wireless network gateway 100 then send the data packets received from the mobile device 200 to the application server 142 over the communication network 112, via a proxy controller 132 or directly to the application server 142. Conversely, the application server 142 or proxy controller 132 sends data packets over the communication network 112 to the wireless network gateway 110, which then transmits the data packets to the destination mobile device 200 over the wireless network WWAN 102 or WLAN 104.

It will be appreciated that the above-described communication system 100 is provided for the purpose of illustration only, and that the above-described communication system 100 comprises one possible communication network configuration of a multitude of possible configurations for use with the mobile device 200. The teachings of the present disclosure may be employed in connection with any other type of network and associated devices that are effective in implementing or facilitating wireless communication. Suitable variations of the communication system are intended to fall within the scope of the present disclosure.

Mobile device applications, such as Internet browsers, often communicate with servers to access data in the form of content or instructions. To access the data on the server, the application may send a number of requests over the Internet to the server. Generally, these applications send requests to servers using standard communication protocols. For example, an Internet browser (interchangeably called a "web browser") on a mobile device will often communicate with a web server using HyperText Transfer Protocol (HTTP) or Wireless Application Protocol (WAP).

An example web browser using HTTP can generate numerous HTTP requests to load a single webpage. Each HTTP request includes a URL request line, followed by headers which contain information that a web server may use to respond appropriately to the request. Each header includes a header field, followed by a single colon, and then a header value. Below is a non-limiting example of an HTTP request.

GET /path/index.html HTTP/1.1
Host: www.example.com
Accept: text/plain, text/html
Accept-Charset: ISO-8859-1, US-ASCII
Accept-Language: EN
Accept-Encoding: gzip,deflate
User-Agent: Mozilla/4.0 (compatible; MSIE 9.0; Windows NT 6.1)

In this example, the header field for "Host" (also called the host header) has a value of "www.example.com." Other headers include "Accept" for specifying certain media types which are acceptable for the response, "Accept-Encoding" for specifying certain compression formats which are acceptable for the response, and "User-Agent" for specifying the user agent (i.e. web browser) used by the mobile device 200 making the request.

In an example embodiment, the mobile device 200 can set one or more headers of the HTTP request based on connection information regarding the network connection used to connect the mobile device 200 to the communication network 112. For example, if the mobile device 200 detects that the network connection uses an older generation network technology (e.g. 2G), the mobile device can set the header Accept to only accept media types that are smaller in size than other available media types to minimize transfer time. In another example, the mobile device 200 can set the Accept-Encoding header to request that content sent in response to the HTTP request be compressed, prior to its transmission.

In another example, the mobile device 200 can set the User-Agent to a specific mobile Internet browser to configure the server 142 receiving the request to respond by sending a mobile format of the content requested, opposed to a non-mobile format. A non-mobile format may contain more files, larger webpages, richer media types (e.g. audio, video, higher resolution images), etc., that can increase the total amount of data sent to the mobile device 200, thus increasing the time required for the mobile device 200 to obtain the content.

It will be appreciated that any one or more headers that can affect the amount of data sent to the mobile device 200 may be selectively set by the mobile device 200. For example, when the network connection used by the mobile device 200 has a maximum data transfer rate below a threshold data transfer capacity, the mobile device 200 can set one or more header to reduce the amount of data to be received by the mobile device 200.

Conversely, when the network connection used by the mobile device 200 has a maximum data transfer rate above a threshold data transfer capacity, the mobile device 200 can set one or more header to enable greater amounts of data to be sent to the mobile device 200. For example, the Accept header may be set to accept rich media types and/or a non-mobile formats (i.e. full or regular format) of a webpage so that the Internet browsing experience on the mobile device 200 is similar to that using a desktop or laptop computer. In another example, the mobile device 200 may set the Accept-Encoding header to null so that the server 142 does not compress data sent to the mobile device 200. This can reduce the computational load of the mobile device 200 and/or server 142 by unnecessarily avoiding the steps of uncompressing or compressing data, respectively, when the network connection can handle increased data transfers.

Therefore, it can be seen that various characteristics of a network connection can be used by the mobile device 200 to determine properties of the content requested. Selectively formatting the header of a protocol request can reduce data transfer times without providing connection information in the protocol request or to the server or recipient of the protocol request. In an embodiment, only existing standard protocol headers are included and modified by the mobile device 200 based on the connection information.

It will be appreciated that the data transfer capacity (i.e. maximum data transfer rate) of a network connection can depend on a number of factors including the type of network connection over which a mobile device 200 and a wireless network 101 are connected, the connection signal strength and/or quality, and the capabilities of the device. Generally, third generation (3G) network technologies such as UMTS, and EvDO CDMA 2000 have higher peak data transfer rates than second generation (2G) networks technologies such as GSM and CDMA. Networks using HSPDA, WiMAX and LTE may have even higher data rates and are sometimes referred to as 3.5G or 4G networks. Generally, stronger signal strengths and lower signal-to-noise ratios (i.e. higher signal quality) allow for higher data transfer rates. It should be apparent that combinations of different network technologies and network characteristics (such as signal strength and/or quality) can be associated with predictably different data transfer rates.

Major urban centres are typically equipped with the latest, highest speed network technologies, while more rural areas are limited to slower network technologies using lower radio frequencies. Likewise, newer mobile phones generally have faster processors and wireless communication systems which allow them to send and receive data at higher data transfer rates using newer network technologies. Newer mobile devices are often backward compatible and can connect to wireless networks over different radio frequencies and using different network technologies while older devices may have hardware and software components which only allow them to connect to older generation networks.

While the examples described herein discuss HTTP headers, the present disclosure may apply to any protocol using headers including but not limited to Session Initiation Protocol (SIP), Real-time Transport Protocol (RTP), File Transfer Protocol (FTP), Simple Mail Transfer Protocol (SMTP), Simple Object Access Protocol (SOAP), and equivalents thereof. Furthermore, the protocol may comprise a protocol at an application layer, a session layer, a transport layer, or any other protocol layer in which a protocol request includes headers for conveying additional information with the request.

In some communication systems, protocol requests sent by communications devices such as the example HTTP request illustrated above are directed through a proxy server or proxy controller 132. The HTTP headers set by the mobile device 200 can be used to indicate one or more properties of the content requested by the HTTP request. A proxy server may forward the protocol request to the appropriate remote application, web service, or content server. If a protocol request is forwarded to a remote server, the remote server replies to the protocol request by sending a protocol response back to the proxy server which forwards the protocol response to the mobile device 200. While acting as an intermediary between communication device clients and the application and content servers, a proxy server may be configured to perform a number of proxy services to configure the protocol response to satisfy one or more properties regarding the content requested, as indicated in the header of the protocol request. It should be understood that a proxy server may be an intermediate server or may form part of a web server. In other implementations, proxy services are performed on a proxy server that is separate from the web server.

In this disclosure, "proxy services" or "proxy service" refers to any tool for improving browsing experience by caching, image transcoding, filtering, JavaScript compilation, pre-fetching, code reduction, video stream decoding, or compression, and may be referred to as web accelerators, compression services, or other terms known in the background for decreasing bandwidth or latency of web content delivered to a client browser. Another example of proxy services may include selection between versions of content that are available for client applications. For example, a proxy service may be implemented to retrieve one of several versions of an image for delivery to a client browser or to send a mobile format or a non-mobile format of a file or webpage.

In the following description, many of the described embodiments involve a mobile device communicating with a server over a wireless network. The present application may be particularly advantageous in a wireless networking situation due to the inherent possibility of changing network communication conditions on wireless networks and devices. Nevertheless, the present application is not necessarily limited to mobile devices and wireless communications and may be applicable more broadly to any communications device configured to send protocol requests to a server.

Examples of applicable mobile electronic devices may include, without limitation, cellular phones, smartphones, tablet computers, wireless organizers, personal digital assistants, computers, laptops, handheld wireless communication devices, wirelessly enabled notebook computers, portable gaming devices, and the like. Such devices will hereinafter be commonly referred to as "mobile devices" 200 for the sake of clarity. It will however be appreciated that the principles described herein are also suitable to other electronic devices, e.g. "non-mobile" devices. For example, the principles herein are equally applicable to personal computers (PCs), tabletop computing devices, wall-mounted screens such as kiosks, or any other computing device.

The mobile device 200 may be a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities).

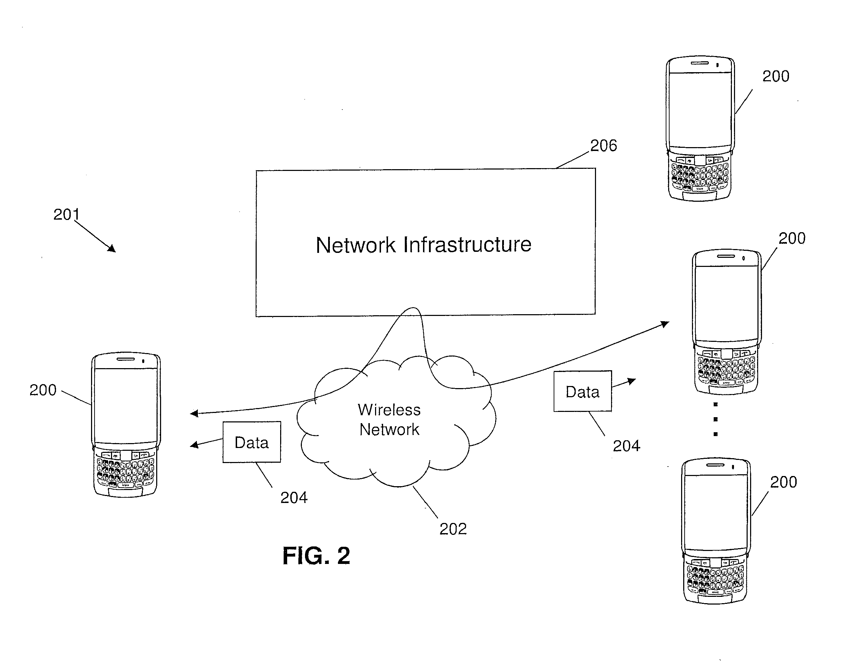

Referring to FIG. 2, an example communication system 201 is shown. The communication system 201, in this example, enables, at least in part, mobile devices 200 to communicate with each other via a wireless network 202. For example, as shown, data 204 may be exchanged between various mobile devices 200. Data 204 that is sent from one mobile device 200 to another mobile device 200 may be transmitted according to a particular messaging or communication medium, protocol, or other mechanism. For example, as shown in FIG. 2, data 204 may be sent over the wireless network 202 via a component of a network infrastructure 206. The network infrastructure 206 can include various systems that may be used by the mobile devices 200 to exchange data 204. For example, a peer-to-peer (P2P) system, a short message service centre (SMSC), an email system (e.g. web-based, enterprise based, or otherwise), a web system (e.g. hosting a website or web service), a host system (e.g. enterprise server), and social networking system may be provided by or within or be otherwise supported or facilitated by the network infrastructure 206. The mobile devices 200 may therefore send data to or receive data from other mobile devices 200 via one or more particular systems with which the mobile devices 200 are communicable via the wireless network 202 and network infrastructure 206.

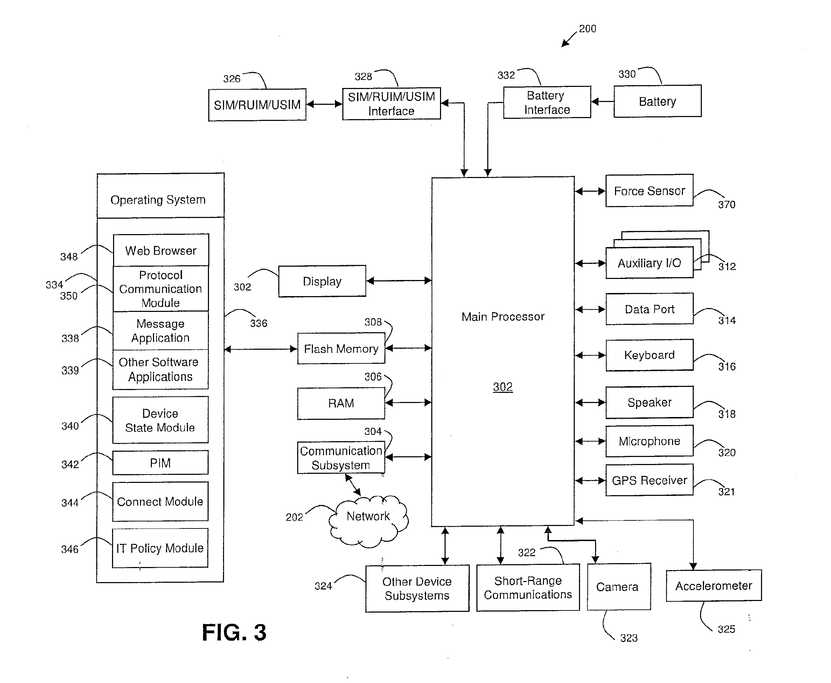

To aid the reader in understanding an example configuration of a mobile device 200, reference will be made to FIG. 3, which illustrates a diagram of an example of a mobile device 200. The mobile device 200 includes a number of components such as a main processor 302 that controls the overall operation of the mobile device 200. Communication functions, including data and voice communications, are performed through a communication subsystem 304. The communication subsystem 304 receives messages from and sends messages to a wireless network 202. In this example of the mobile device 200, the communication subsystem 304 is configured in accordance with GSM and GPRS standards, which is used worldwide. Other communication configurations that are equally applicable are the 3G and 4G networks such as EDGE, UMTS, HSDPA, LTE, WiMax, etc. New standards are still being defined, but it is believed that they will have similarities to the network behaviour described herein, and it will also be understood by persons skilled in the art that the example described herein are intended to use any other suitable standards that are developed in the future. The wireless link connecting the communication subsystem 304 with the wireless network 202, such as WWAN 102, represents one or more different Radio Frequency (RF) channels, operating according to defined protocols specified for GSM/GPRS communications.

The main processor 302 also interacts with additional subsystems such as a Random Access Memory (RAM) 306, a flash memory 308, a touch sensitive display 302, an auxiliary input/output (I/O) subsystem 312, a data port 314, a keyboard 316, a speaker 318, a microphone 320, a GPS receiver 321, short-range communications 322, a camera 323, a accelerometer 325 and other device subsystems 324. Some of the subsystems of the mobile device 200 perform communication-related functions, whereas other subsystems may provide "resident" or on-device functions. By way of example, the display 302 and the keyboard 316 may be used for both communication-related functions, such as entering a text message for transmission over the network 202, and device-resident functions such as a calculator or task list. In one example, the mobile device 200 can include a non touch sensitive display in place of, or in addition to the touch sensitive display 302.

The mobile device 200 can send and receive communication signals over the wireless network 202 after required network registration or activation procedures have been completed. Network access is associated with a subscriber or user of the mobile device 200. To identify a subscriber, the mobile device 200 may use a subscriber module component or "smart card" 326, such as a Subscriber Identity Module (SIM), a Removable User Identity Module (RUIM) and a Universal Subscriber Identity Module (USIM). In the example shown, a SIM/RUIM/USIM 326 is to be inserted into a SIM/RUIM/USIM interface 328 in order to communicate with a network. Without the component 326, the mobile device 200 is not fully operational for communication with the wireless network 202. Once the SIM/RUIM/USIM 326 is inserted into the SIM/RUIM/USIM interface 328, it is coupled to the main processor 302.

The mobile device 200 is typically a battery-powered device and includes a battery interface 332 for receiving one or more rechargeable batteries 330. In at least some examples, the battery 330 can be a smart battery with an embedded microprocessor. The battery interface 332 is coupled to a regulator (not shown), which assists the battery 330 in providing power to the mobile device 200. Although current technology makes use of a battery, future technologies such as micro fuel cells may provide the power to the mobile device 200.

The mobile device 200 also includes an operating system 334 and software components 336 to 346 which are described in more detail below. The operating system 334 and the software components 336 to 346 that are executed by the main processor 302 are typically stored in a persistent store such as the flash memory 308, which may alternatively be a read-only memory (ROM) or similar storage element (not shown). Those skilled in the art will appreciate that portions of the operating system 334 and the software components 336 to 346, such as specific device applications, or parts thereof, may be temporarily loaded into a volatile store such as the RAM 306. Other software components can also be included, as is well known to those skilled in the art.

The subset of software applications 336 that control basic device operations, including data and voice communication applications, may be installed on the mobile device 200 during its manufacture. Software applications may include a message application 338, a device state module 340, a Personal Information Manager (PIM) 342, a connect module 344, an IT policy module 346, a web browser 348 and a protocol communication module 350. A message application 338 can be any suitable software program that allows a user of the mobile device 200 to send and receive electronic messages, wherein messages are typically stored in the flash memory 308 of the mobile device 200. A device state module 340 provides persistence, i.e. the device state module 340 ensures that important device data is stored in persistent memory, such as the flash memory 308, so that the data is not lost when the mobile device 200 is turned off or loses power. A PIM 342 includes functionality for organizing and managing data items of interest to the user, such as, but not limited to, e-mail, contacts, calendar events, and voice mails, and may interact with the wireless network 202. A connect module 344 implements the communication protocols that are required for the mobile device 200 to communicate with the wireless infrastructure and any host system, such as an enterprise system, that the mobile device 200 is authorized to interface with. An IT policy module 346 receives IT policy data that encodes the IT policy, and may be responsible for organizing and securing rules such as the "Set Maximum Password Attempts" IT policy. A web browser 348 provides an application to access the Internet. A protocol communication module 350 is configured to set header information of a protocol request based on connection information of the network connections used by the mobile device 200, as will be discussed in more detail below.

Other types of software applications or components 339 can also be installed on the mobile device 200. These software applications 339 can be pre-installed applications (i.e. other than message application 338) or third party applications, which are added after the manufacture of the mobile device 200. Examples of third party applications include games, calculators, utilities, etc.

The additional applications 339 can be loaded onto the mobile device 200 through at least one of the wireless network 202, the auxiliary I/O subsystem 312, the data port 314, the short-range communications subsystem 322, or any other suitable device subsystem 324.

The data port 314 can be any suitable port that enables data communication between the mobile device 200 and another computing device. The data port 314 can be a serial or a parallel port. In some instances, the data port 314 can be a USB port that includes data lines for data transfer and a supply line that can provide a charging current to charge the battery 330 of the mobile device 200.

For voice communications, received signals are output to the speaker 318, and signals for transmission are generated by the microphone 320. Although voice or audio signal output is accomplished primarily through the speaker 318, the display 302 can also be used to provide additional information such as the identity of a calling party, duration of a voice call, or other voice call related information.

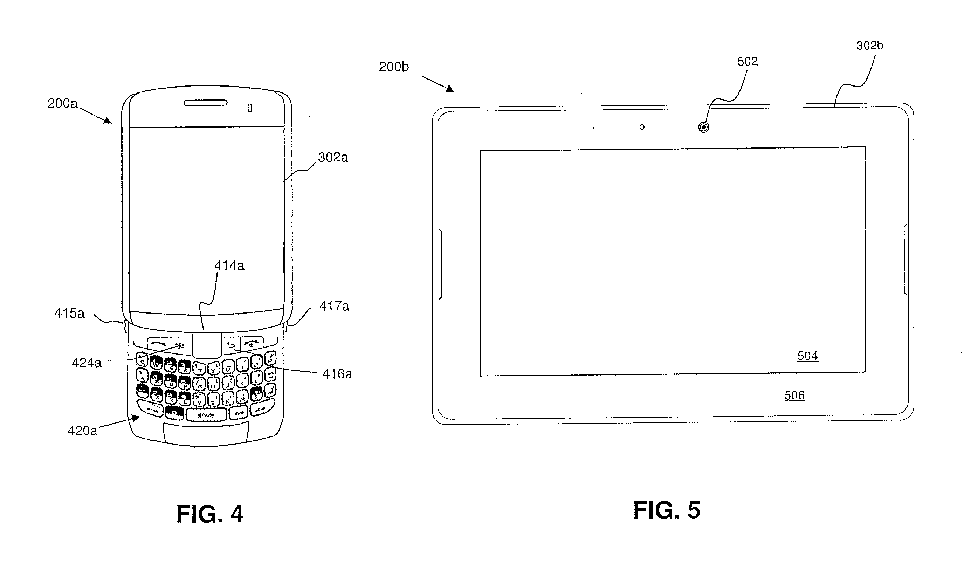

Referring to FIGS. 4 and 5, one example of a mobile device 200a is shown in FIG. 4 and another example of a mobile device 200b is shown in FIG. 5. It will be appreciated that the numeral "200" will hereinafter refer to any mobile device 200, including the examples 200a and 200b, those examples enumerated above or otherwise. It will also be appreciated that a similar numbering convention may be used for other general features common between all figures.

The mobile device 200a shown in FIG. 4 includes a touch sensitive display 302a and a cursor or positioning device, which in this example is in the form of a trackpad 414a. The trackpad 414a permits multi-directional positioning of a selection indicator or cursor that can be displayed on the touch sensitive display 302a such that the selection cursor can be moved in an upward, downward, left and right direction, and if desired and/or permitted, in any diagonal direction. A selection cursor may include a box, alteration of an icon or any combination of features that enable the user to identify the currently chosen icon or item. The trackpad 414a in this example is situated on the front face of a housing for mobile device 200a to enable a user to manoeuvre the trackpad 414a while holding the mobile device 200a in one hand. The trackpad 414a may serve as another input member (in addition to a directional or positioning member) to provide selection inputs to a processor of the mobile device and can preferably be pressed in a direction towards the housing of the mobile device 200a to provide such a selection input. It will be appreciated that the trackpad 414a is only one example of a suitable positioning device. For example, a trackball, touch sensitive display, OLED, or other input mechanism may equally apply.

The mobile device 200a in FIG. 4 also includes a programmable convenience button 415a to activate a selection application such as, for example, a calendar or calculator. Further, mobile device 200a also includes an escape or cancel button 416a, a camera button 417a, a menu or option button 424a and a keyboard 420a. The camera button 417a is able to activate photo and video capturing functions, e.g. when pressed in a direction towards the housing. The menu or option button 424a can be used to load a menu or list of options on the display 302a when pressed. In this example, the escape or cancel button 416a, the menu option button 424a, and a keyboard 420a are disposed on the front face of the mobile device housing, while the convenience button 415a and camera button 417a are disposed at the side of the housing. This button placement enables a user to operate these buttons while holding the mobile device 200a in one hand. The keyboard 420a is, in this example, a standard QWERTY keyboard, however, it will be appreciated that reduced QWERTY or virtual keyboards (e.g. as provided by a touch sensitive display) may equally apply.

It will be appreciated that for the mobile device 200, a wide range of one or more positioning or cursor/view positioning mechanisms such as a touch/track pad, a positioning wheel, a joystick button, a mouse, a touch sensitive display, a set of arrow keys, a tablet, an accelerometer (for sensing orientation and/or movements of the mobile device 200 etc.), OLED, or other whether presently known or unknown may be employed. Similarly, any variation of keyboard 420a may be used. It will also be appreciated that the mobile devices 200 shown in FIGS. 4 and 5 are for illustrative purposes only and various other mobile devices 200 are equally applicable to the following examples. Other buttons may also be disposed on the mobile device housing such as colour coded "Answer" and "Ignore" buttons to be used in telephonic communications.

A front view of an example of the mobile device 200b is shown in FIG. 5. The mobile device 200b includes a touch sensitive display 302b and a front camera 502. The touch sensitive display 302b includes a touch sensitive display area 504 and a touch sensitive non-display area 506. The touch sensitive display area 504 serves as the position device to provide an input mechanism in addition to display capabilities. The touch sensitive non-display area 506 provides a further input mechanism, for example, to control menu options of the mobile device 200b.

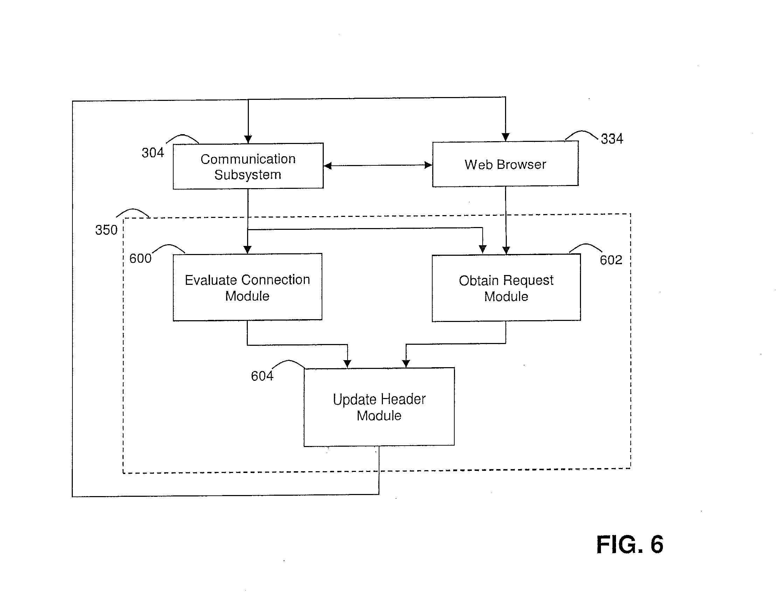

Referring to FIG. 6, an example of a protocol communication module 350 is provided. The protocol communication module 350 can be one of the other software applications 339 of FIG. 3 that can be loaded on the mobile device 200. In another embodiment, the protocol communication module 350 can be part of the web browser 334 or communication subsystem 304. The protocol communication module 350 can request or receive protocol requests from a component that can create or access protocol requests, such as web browser 334 or communication subsystem 304 of FIG. 3. The protocol communication module 350 can also receive connection information regarding the network connections used by the mobile device 200 from the communication subsystem 304 or another component with access to such information.

The protocol communication module 350 in the example of FIG. 6 includes an evaluate connection module 600 for receiving connection information regarding the network connections used by the mobile device 200. The protocol communication module 350 also includes a obtain request module 602 for obtaining a protocol request to be sent by the mobile device 200 over a communication network 112. The protocol communication module 350 also includes an update header module 604 for determining at least one property of the content to be requested in the protocol request and updating header information to indicate such property or properties in the protocol request.

The evaluate connection module 600 receives connection information from the communication subsystem 304 and determines various properties associated with the network connections used by the mobile device 200, such as the connection type, signal strength and/or quality, and data transfer capacity. Connection information identifies the current connection status of the mobile device 200 to a network. In some embodiments, the connection information may include the network technology with which the device 200 is connected to the wireless network 101 such as GSM, GPRS, EDGE, HSDPA or any other network technology. The connection information may also indicate whether the mobile device 200 is connected to the network via Wi-Fi or a USB connection to a host computer.

In some embodiments, the connection information may include the generation of the network technology such as 2G, 3G, 3.5G, or 4G. In other embodiments, the connection information may include the data transfer capacity of the current network connection.

In some embodiments, the connection information further includes the current signal strength of the connection between the device 200 and the wireless network 101. The signal strength may be stored in any format such as decibels (dB), decibels referenced to one milliwatt (dBm), or any enumerated set such as a number of signal strength bars. Signal strength bars commonly represent ranges of dB or dBm values wherein more bars typically indicate stronger signal strength.

Connection information may also include the signal quality, measure by a signal-to-noise ratio of the wireless network connection signal. It will be appreciated that connection information may also include any information regarding the device's connection to a network not specifically mentioned in the examples above.

The obtain request module 602 obtains a protocol request to be sent by the mobile device 200 over a communication network 112. The protocol request may conform to HTTP or other similar protocols. For example, a web browser 348 running on a tablet mobile device 200 that requests the URL http://www.example.com/path/index.html can generate the example default HTTP request:

GET /path/index.html HTTP/1.1
Host: www.example.com
Accept: text/plain, text/html, image/jpeg
Accept-Charset: ISO-8859-1, US-ASCII
Accept-Language: EN
User-Agent: Mozilla/5.0 (PlayBook; U; RIM Tablet OS 2.1.0; en-US) AppleWebKit/536.2+ (KHTML, like Gecko) Version/7.2.1.0 Safari/536.2+

The update header module 604 receives connection information and a protocol request from the evaluate communication module 600 and obtain request module 602, respectively. The update header module 604 uses the connection information to update or format headers in the protocol request so that content with a particular property or properties is requested.

In one example, the update header module 604 can categorize network connection types, based on their data transfer capacity, into a finite set of categories, each category associated with specific header formatting. For example, a network connection using 2G network technology may be categorized as SLOW, using 3G network technology as NORMAL and using 4G network technology as FAST.

When the update header module 604 identifies a SLOW network connection, the update header module 604 may format the header to minimize the size of the content to be requested by updating the User-Agent header to a mobile web browser, requesting compression of the data to be received, limiting the content to basic media types, etc. In the example default HTTP request described above, when a SLOW network connection is detected, the update header module 604 may update the header of the HTTP request to:

GET /path/index.html HTTP/1.1
Host: www.example.com
Accept: text/plain, text/html, **image/gif**
Accept-Charset: ISO-8859-1, US-ASCII
Accept-Language: EN
**Accept-Encoding: gzip,deflate**
User-Agent: **Mozilla/5.0 (BlackBerry; U; BlackBerry 9800; en-US)**
**AppleWebKit/534.8+ (KHTML, like Gecko) Version/6.0.0.701 Mobile**
**Safari/534.8+**

In this example SLOW HTTP request, the update header module 604 modified the Accept header to accept images in the .gif format instead of the .jpeg format, which is typically smaller in size. The update header module 604 has also added the Accept-Encoding header to request that data be compress in the response to the SLOW HTTP request and modified the User-Agent to a mobile browser to request the mobile version of the website in the response to the SLOW HTTP.

When the update header module 604 identifies a NORMAL network connection, the update header module 604 may apply different header formatting than is applied for a SLOW network connection. In the example default HTTP request described above, when a NORMAL network connection is detected, the update header module 604 may update the header of the HTTP request to:

GET /path/index.html HTTP/1.1
Host: www.example.com
Accept: text/plain, text/html, image/jpeg
Accept-Charset: ISO-8859-1, US-ASCII
Accept-Language: EN
**Accept-Encoding: gzip,deflate**
User-Agent: Mozilla/5.0 (PlayBook; U; RIM Tablet OS 2.1.0; en-US) AppleWebKit/536.2+ (KHTML, like Gecko) Version/7.2.1.0 Safari/536.2+

In this example NORMAL HTTP request, the update header module 604 has added the Accept-Encoding header to compress the data to be sent in the response to the NORMAL HTTP request.

When the update header module 604 identifies a FAST network connection, the update module 604 may perform a different set of header formatting, such as updating the User-Agent to a non-mobile web browser and accepting rich media types. In the example default HTTP request described above, when a FAST network connection is detected, the update header module 604 may update the header of the HTTP request to:

GET /path/index.html HTTP/1.1
Host: www.example.com
Accept: text/plain, text/html, image/jpeg
Accept-Charset: ISO-8859-1, US-ASCII
Accept-Language: EN
User-Agent: **Mozilla/4.0 (compatible; MSIE 9.0; Windows NT 6.1)**

In this example FAST HTTP request, the update header module 604 has modified the User-Agent to a non-mobile browser so that the response to the FAST HTTP request will include the non-mobile version of the website.

In another example, the update header module 604 can categorize a network connection by its signal strength, each category associated with specific header formatting. For example, the signal strength can be categorized into 5 levels spanning different ranges of dBm values: -75dbm or greater; -76dbm to -85dbm; -86dbm to -95dbm, -96dbm to - 105dbm and -106dbm or less, with less negative values representing stronger signal strength.

In another example, the update header module 604 can categorize a network connection by its data transfer capacity, each category associated with specific header formatting. For example, the data transfer capacity can be categorized into different ranges of data transfer capacities. For example, a network connection with a data transfer capacity of 237 kbits/sec or less may be categorised as SLOW, between 238 kbits/sec and 15Mbits/sec as NORMAL and greater than 15Mbits/sec as FAST.

It will be appreciated that the update header module 604 can associate any one or more combinations of different characteristics of the network connection with different header formatting, including the connection type, signal strength, data transfer capacity and any other connection information available to the mobile device 200.

After updating the header of a protocol request, the update header module 604 can send the updated protocol request to the communication system 304 (directly or via the web browser 334) for transmission to a wireless network 202 connected to the mobile device 200. It can be appreciated that the update header module 604 may be configured to communicate with other subsystems available on the mobile device 200 that can send the protocol request to a wireless network 202.

It will be appreciated that any module, subsystem component exemplified herein that executes instructions or operations may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data, except transitory propagating signals per se. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 200 or accessible or connectable thereto. Any application or module herein described may be implemented using computer readable/executable instructions or operations that may be stored or otherwise held by such computer readable media.

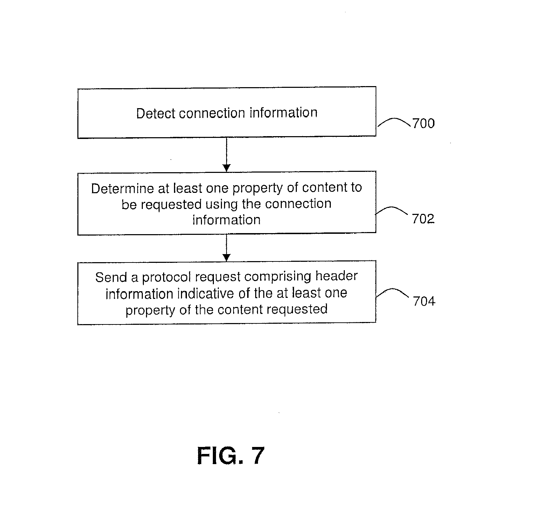

Referring to FIG. 7, an example set of computer executable instructions is provided for requesting content using an electronic device, such as a mobile device 200. At 700, connection information regarding the network connection used by the mobile device 200 is detected. At 702, at least one property of the content to be requested is determined using the connection information. At 704, a protocol request is sent to a server using the communication network. The protocol request includes header information indicative of the at least one property of the content requested.

As noted above, at 700, connection information regarding the network connection used by the mobile device 200 is detected. In an example configuration of the protocol communication module 350, the evaluate connection module 600 may implement 700 (FIG. 6). In an example, the connection information can include one or more of a network connection type, a signal strength, a signal quality and a data transfer capacity of the network connection.

In one embodiment, the mobile device 200 can obtain at least a portion of the connection information from a network provider of the network connection used by the mobile device 200. For example, a mobile network service provider of a WWAN102, such as cellular network provider, may be experiencing congestion due to failure of one or more base stations implementing the wireless network connecting the mobile device 200. The network provider may provide connection information that will cause the mobile device to format the header of one or more protocol requests to a SLOW network connection configuration. This can provide the network provider a mechanism to reduce the load on its network and reduce the likelihood of an interruption or further interruption of service due to overloading the wireless network. The connection information from the network provider may also include information not otherwise detectable by the mobile device 200 or may include information on its networks that is more accurate or up-to-date than that detectable by the mobile device 200.

At 702, at least one property of the content to be requested is determined using the connection information. In an example configuration of the protocol communication module 350, the update header module 604 may implement 700 (FIG. 6). As discussed above, any one or more of the characteristics of the network connection, including the connection type, signal strength, signal quality and data transfer capacity can be used to modify the properties of the content to be requested, by updating a corresponding request header.

In an example, the mobile device 200 can select a variant of the requested content from a plurality of variants available from a server 142 (e.g. mobile format or non-mobile format of a webpage, different qualities of an image, etc.). The variant can be selected indirectly by setting the User-Agent to a corresponding browser type or other header that can trigger the server 142 to respond with the desired variant. In another example, the server 142 can provide an explicit protocol message listing the available variants (e.g. HTTP 300 Multiple Choices response) from which the mobile device 200 can select the desired variant by responding with a protocol request for the desired variant.

At 704, a protocol request is sent to a server using the communication network. The protocol request includes header information indicative of the at least one property of the content requested.

It will be appreciated that the protocol request can be one of a number of communication protocols used in a computer network such as an application layer protocol, a session layer protocol and a transport layer protocol. In one example, the protocol request uses Hypertext Transfer Protocol (HTTP) or Wireless Application Protocol (WAP).

As mentioned above, a server 142 may provide variants of a particular content that differs by quality, file format, size, content formatting and other properties that can be modified by the server 142 or that differ in variants obtainable by the server 142. In one example, the server 142 can perform one or more services, such as proxy services, in order to configure the requested content to satisfy the properties indicated in the header of the protocol request. In one example, the proxy services can be performed by the proxy controller 132, which may be part of a separate proxy server.

It will be appreciated that the examples and corresponding diagrams used herein are for illustrative purposes only. Different configurations and terminology can be used without departing from the principles expressed herein. For instance, components and modules can be added, deleted, modified, or arranged with differing connections without departing from these principles.

The steps or operations in the flow charts and diagrams described herein are just for example. There may be many variations to these steps or operations without departing from the spirit of the invention or inventions. For instance, the steps may be performed in a differing order, or steps may be added, deleted, or modified.

Although the above has been described with reference to certain specific examples, various modifications thereof will be apparent to those skilled in the art as outlined in the appended claims.

## Claims

1. A method of requesting content using an electronic device, the electronic device connected to a communication network using a network connection, the method comprising:
detecting connection information regarding the network connection;
determining at least one property of the content to be requested using the connection information; and
sending a protocol request to a server using the communication network, the protocol request comprising header information indicative of the at least one property.

2. The method of claim 1, wherein the connection information comprises any one or more of a connection type, a signal strength, a signal quality and a data transfer capacity.

3. The method of claim 1 or claim 2, wherein the determining at least one property of the content using the connection information comprises selecting a variant of the content from a plurality of variants available to the server.

4. The method of any one of claims 1 to 3, wherein the at least one property comprises any one or more of a content size and a content format.

5. The method of claim 4, wherein the content format comprises a mobile format and the header information comprises a user agent set to a mobile web browser.

6. The method of any one of claims 1 to 5, wherein the network connection is a wireless network.

7. The method of any one of claims 1 to 6, wherein the protocol request uses any one of an application layer protocol, a session layer protocol and a transport layer protocol.

8. The method of any one of claims 1 to 7, wherein the protocol request uses Hypertext Transfer Protocol (HTTP) or Wireless Application Protocol (WAP).

9. The method of any one of claims 1 to 8, wherein the protocol request is sent to the server for performing at least one service on the content according to the header information, the at least one service configured to configure the content to satisfy the at least one property.

10. The method of any one of claims 1 to 9, further comprising obtaining at least a portion of the connection information from a network provider of the network connection.

11. A computer readable storage medium for requesting content using an electronic device, the electronic device connected to a communication network using a network connection, the computer readable storage medium comprising computer executable instructions that when executed by a processor cause the processor to perform the method according to any one of claims 1 to 10.

12. An electronic device for requesting content, the electronic device operable to connect to a communication network using a network connection, the electronic device comprising a processor coupled to memory, the memory storing computer executable instructions that when executed by the processor cause the processor to perform the method according to any one of claims 1 to 10.

## Amended claims

### Amended claims in accordance with Rule 137(2) EPC.

**1.** A method of requesting content using an electronic device (200), the electronic device (200) connected to a communication network (112) using a network connection, the method performed by the electronic device (200), the method comprising:
detecting connection information regarding the network connection;
determining at least one property of the content to be requested using the connection information; and
sending a protocol request to a server (142) using the communication network (112), the protocol request comprising header information indicative of the at least one property.

**2.** The method of claim 1, wherein the connection information comprises any one or more of a connection type, a signal strength, a signal quality and a data transfer capacity.

**3.** The method of claim 1 or claim 2, wherein the determining at least one property of the content using the connection information comprises selecting a variant of the content from a plurality of variants available to the server (142).

**4.** The method of any one of claims 1 to 3, wherein the at least one property comprises any one or more of a content size and a content format.

**5.** The method of claim 4, wherein the content format comprises a mobile format and the header information comprises a user agent set to a mobile web browser.

**6.** The method of any one of claims 1 to 5, wherein the network connection is a wireless network (101).

**7.** The method of any one of claims 1 to 6, wherein the protocol request uses any one of an application layer protocol, a session layer protocol and a transport layer protocol.

**8.** The method of any one of claims 1 to 7, wherein the protocol request uses Hypertext Transfer Protocol (HTTP) or Wireless Application Protocol (WAP).

**9.** The method of any one of claims 1 to 8, wherein the protocol request is sent to the server (142) for performing at least one service on the content according to the header information, the at least one service configured to configure the content to satisfy the at least one property.

**10.** The method of any one of claims 1 to 9, further comprising obtaining at least a portion of the connection information from a network provider of the network connection.

**11.** A computer readable storage medium for requesting content using an electronic device (200), the electronic device (200) connected to a communication network (112) using a network connection, the computer readable storage medium comprising computer executable instructions that when executed by a processor (302) cause the processor (302) to perform the method according to any one of claims 1 to 10.

**12.** An electronic device (200) for requesting content, the electronic device (200) operable to connect to a communication network (112) using a network connection, the electronic device (200) comprising a processor (302) coupled to memory, the memory storing computer executable instructions that when executed by the processor (302) cause the processor (302) to perform the method according to any one of claims 1 to 10.
